Europäisches Patentamt

European Patent Office

Office européen des brevets

(19)

(11) Veröffentlichungsnummer: **0 399 493**

**A2**

(12) **EUROPÄISCHE PATENTANMELDUNG**

(21) Anmeldenummer: **90109785.7**

(22) Anmeldetag: **23.05.90**

(51) Int. Cl.5: **H01S 3/03**

(30) Priorität: **26.05.89 DE 3917254**

(43) Veröffentlichungstag der Anmeldung:
**28.11.90 Patentblatt 90/48**

(84) Benannte Vertragsstaaten:
**DE FR GB IT**

(71) Anmelder: **Firma Carl Zeiss**

**D-7920 Heidenheim (Brenz)(DE)**
(84) **DE FR IT**

Anmelder: **CARL-ZEISS-STIFTUNG trading as CARL ZEISS**

**D-7920 Heidenheim (Brenz)(DE)**
(84) **GB**

(72) Erfinder: **Hinz, Alexander, Dr.**
**Eichhaldenstrasse 8**
**D-7923 Königsbronn(DE)**
Erfinder: **Krug, Franz**
**Köhlerstrasse 29**
**D-7080 Aalen-Ebnat(DE)**
Erfinder: **Volkenandt, Harald**
**Schneeweg 12**
**D-7080 Aalen-Ebnat(DE)**

(54) CO2-Wellenleiter-Laser.

(57) Für einen hochstabilen $CO_2$-Wellenleiter-Laser wird ein Resonatorblock aus einem Material mit niedrigem thermischen Ausdehnungskoeffizienten verwendet, der mit einem Fenster versehen ist, das für die Wellenlänge des Lasers transparent ist. Die Laserreflektoren werden durch Ansprengen an den Resonatorkörper in Position gebracht und bilden eine vakuumdichten Abschluß des Resonatorblocks, der damit eine fest definierte Justierung erhält.

EP 0 399 493 A2

## CO₂-Wellenleiter-Laser

Die Erfindung betrifft einen $CO_2$-Wellenleiter-Laser, bestehend aus einem Resonatorblock und zwei Reflektoren mit einem Wellenleiterkanal.

Derartige Wellenleiter-Laser werden z.B. für Laser-Radar-Systeme eingesetzt, die für den Überlagerungsempfang mit $CO_2$-Lasern in der Frequenz hochstabile Lokaloszillatoren der Leistungsklasse kleiner 1 Watt benötigen.

$CO_2$-Wellenleiter-Laser sind beschrieben im Laser Handbook Vol. 3, North-Holland Publishing Company 1979. Auf Seite 78 dieser Veröffentlichung ist ein $CO_2$-Wellenleiter-Laser mit einer getrennten Anordnung von Resonatorstruktur und Wellenleiterkanal beschrieben, die aus unterschiedlichen Materialien hergestellt ist. Die Resonatorstruktur, die den Spiegelabstand definiert, besteht bei diesem bekannten Laser aus Materialien mit niedrigen Temperatur-Ausdehnungskoeffizienten. Nachteilig bei diesem Laser ist seine Empfindlichkeit gegenüber Vibration und Erschütterungen, welche seine Frequenzstabilität ungünstig beeinflußt.

Auf Seite 72 des genannten Laser Handbuchs ist ein aus einem Körper bestehender Aufbau (monolithischer Aufbau) von Resonator und Wellenleiterkanal beschrieben. Dieser bekannte Aufbau ist aus Keramikmaterialien mit relativ großem Temperaturkoeffizienten aufgebaut und hat deshalb den Nachteil einer schlechten thermischen Längenstabilität.

Der Erfindung liegt die Aufgabe zugrunde, einen hochstabilen $CO_2$-Wellenleiter-Laser anzugeben, der frei ist von den Nachteilen, mit denen bisher bekannte $CO_2$-Wellenleiter-Laser behaftet sind.

Diese Aufgabe wird erfindungsgemäß dadurch gelöst, daß der Resonatorblock aus einem Material mit niedrigen thermischen Ausdehnungskoeffizienten besteht, ein für die Wellenlänge des Lasers durchlässiges Fenster aufweist und daß die Reflektoren mittels Ansprengverfahren am Resonatorblock vakuumdicht befestigt sind.

In einem vorteilhaften Ausführungsbeispiel der Erfindung wird für den Resonatorblock ein unter dem Handelsnamen Zerodur bekanntes Glaskeramik-Material verwendet.

Zweckmäßigerweise ist einer der Reflektoren als Totalreflektor und der andere als Reflexionsgitter zur Wellenlängenselektion des Lasers ausgeführt.

Vorteilhafterweise werden Totalreflektor und Reflexionsgitter mittels bekannter Aufdampf- oder Sputterverfahren auf einem Material mit niedrigem thermischen Ausdehnungskoeffizienten, das dem Material des Resonatorblockes entspricht, aufgebracht.

Die Gasentladung wird zweckmäßigerweise mit Gleichstrom angeregt oder mit hochfrequentem Wechselstrom.

In dem beschriebenen Ausführungsbeispiel wird der Laserstrahl über die nullte Ordnung des Reflexionsgitter ausgekoppelt.

Vorteilhafterweise wird die Verstellung der optischen Weglänge des Lasers durch Verstellung des Gitters senkrecht zu seiner Oberfläche erreicht. Der Verstellweg ist somit ca. 45° zur Resonatorachse orientiert.

Um eine gute Modenqualität des Lasers zu erreichen, beträgt zweckmäßigerweise die Fresnelzahl F des Resonators, definiert durch $a^2 / \lambda L$, (a = Kapillarradius, L = Resonatorlänge), Werte zwischen 0,85 und 0,9 oder ganzzahlige Bruchteile davon (0,85 / N, wobei N eine natürliche Zahl ist).

Für eine andere Wahl des emittierten Wellenlängenbereiches können andere geeignete Gase als $CO_2$ verwendet werden, beispielsweise CO.

Die mit der Erfindung erzielten Vorteile bestehen insbesondere darin, daß der Einsatz des Ansprengsverfahrens für die Reflektoren eine präzise und dauerhafte Positionierung derselben erlaubt, so daß keine weitere Justierung des Lasers erforderlich ist.

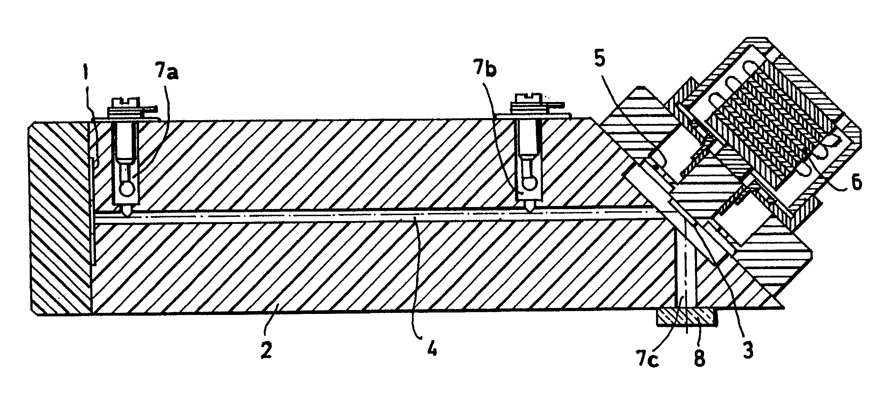

Ein Ausführungsbeispiel der Erfindung ist in der Zeichnung dargestellt und wird im folgenden näher beschrieben.

Die einzige Figur zeigt einen Schnitt durch den erfindungsgemäßen $CO_2$-Wellenleiter-Laser in schematischer Darstellung.

Mit dem Bezugszeichen (2) ist der Resonatorblock bezeichnet, der aus einem Material mit niedrigem thermischen Ausdehnungskoeffizienten hergestellt ist. Vorzugsweise wird dafür ein unter dem Markennamen Zerodur bekanntes Glaskeramik-Material verwendet. In der Längsachse des Resonatorblocks (2) ist der Wellenleiterkanal (4) angeordnet. Mit (7a und 7b) sind Bohrungen zur Aufnahme von Anode und Kathode bezeichnet und mit (7c) die Bohrung für die Strahlführung. Die Ansprengflächen zur Aufnahme des als Totalreflektor ausgebildeten Endspiegels (1) und des Reflexionsgitter (3) sind präzise zum Wellenleiterkanal (4) ausgerichtet. Auf der Seite des Endspiegels (1) beträgt der Winkel 90°, auf der Seite des Reflexionsgitters (4) beträgt der Winkel ca. 45°, der exakte Wert ist durch die Gitterkonstante und die zu selektierende Laser-Wellenlänge definiert. Der Totalreflektor (1) ist durch Aufdampfen von Gold oder von anderen hochreflektierenden Schichten auf ein poliertes Substrat, das aus dem gleichen Material wie der Resonatorkörper (2) besteht, hergestellt. Das Reflexionsgitter ist auf dem gleichen oder einem ähnli-

chen Substratmaterial aufgebracht. Die Auskopplung des Laserstrahls aus dem Resonator erfolgt über die nullte Ordnung des Gitters. Ein auf den Resonatorkörper (2) aufgebrachtes Fenster (8), das für die Wellenlänge des Lasers transparent ist, bildet einen vakuumdichten Abschluß. Da dieses Fenster nicht Teil des Laserresonators ist, hat es keinen Einfluß auf die Frequenzstabilität des Lasers. Endspiegel (1) und Reflexionsgitter (3) werden durch Ansprengen an den Resonatorkörper in Position gebracht und bilden einen vakuumdichten Abschluß des Laserkörpers. Der Resonator erhält damit eine fest definierte Justierung. Die Resonatorlänge und damit die Frequenzstabilität wird ausschließlich durch das verwendete Material mit niedrigem Ausdehnungskoeffizienten definiert. Im Falle der Verwendung von Zerodur läßt sich im Ausdehnungsminimum dieses Materials eine Frequenzstabilität des Lasers (fo = 30 THz) von besser 200 KHz / °C erreichen. Der Einfluß der dünnen Schichten von Totalreflektor und Gitter kann dabei vernachläßigt werden. Das Laserplasma wird durch eine longitudinale Gleichstromentladung im Wellenleiterkanal angeregt. Es liegt jedoch im Bereich fachmännischen Könnens, für die Anregung wahlweise eine hochfrequente Wechselstromentladung zu verwenden. Anode und Kathode werden in den dafür vorgesehenen Bohrungen (7a und 7b) im Resonatorkörper (2) vakuumdicht eingesetzt. Das Reflexionsgitter (3) kann auf einem Substrat (5), die eine ringförmige Membran enthält, aufgebracht werden. Durch Verschieben des Gitters wird die Resonatorlänge fein abgestimmt. Die erforderliche Verstellung wird mit Hilfe eines Piezokeramikplattenstapels (6) erreicht. Durch die Anordnung des Gittersubstrates (5) in einem Winkel von 45° zur Resonatorachse ergibt sich ein effektiver Verstellweg des zweifachen Membranwegs, was eine verringerte Materialbelastung ergibt. Um eine gute Modenqualität und einen guten Einfrequenzbetrieb des Lasers zu erreichen, wird die Fresnelzahl F des Resonators, die definiert ist durch die Formel $a^2 / \lambda . L$ (a = Kapillarradius, L = Resonatorlänge) auf Werte zwischen 0,85 und 0,9 eingestellt oder auf ganzzahlige Bruchteile dieses Wertes.

## Ansprüche

1. $CO_2$-Wellenleiter-Laser, bestehend aus einem Resonatorblock (2) mit zwei Reflektoren und aus einem Wellenleiterkanal, dadurch gekennzeichnet, daß der Resonatorblock (2) aus einem Material mit niedrigem thermischen Ausdehnungskoeffizienten besteht, ein für die Wellenlänge des Lasers durchlässiges Fenster (8) aufweist und daß die Reflektoren (1,3) mittels Ansprengverfahren am Resonatorblock (2) vakuumdicht befestigt sind.

2. $CO_2$-Wellenleiter-Laser nach Anspruch 1, dadurch gekennzeichnet, daß der Resonatorblock aus Glas-Keramik besteht.

3. $CO_2$-Wellenleiter-Laser nach Anspruch 2, dadurch gekennzeichnet, daß einer der Reflektoren als Totalreflektor (1) und der andere als Reflexionsgitter (3) ausgeführt ist.

4. $CO_2$-Wellenleiter-Laser nach Anspruch 3, dadurch gekennzeichnet, daß der Totalreflektor (1) und das Reflexionsgitter (3) mittels bekannter Aufdampf- oder Sputterverfahren auf einem Material mit niedrigem thermischen Ausdehnungskoeffizienten aufgebracht sind.

5. $CO_2$-Wellenleiter-Laser nach Anspruch 4, dadurch gekennzeichnet, daß die Gasentladung mit Gleichstrom oder mit hochfrequentem Wechselstrom angeregt wird.

6. $CO_2$-Wellenleiter-Laser nach Anspruch 5, dadurch gekennzeichnet, daß der Laserstrahl über die nullte Ordnung des Reflexionsgitters (3) ausgekoppelt wird.

7. $CO_2$-Wellenleiter-Laser nach Anspruch 6, dadurch gekennzeichnet, daß die Verstellung der optischen Weglänge über das Gitter um einen Winkel von ca. 45° zur Resonatorachse erfolgt.

8. $CO_2$-Wellenleiter-Laser nach Anspruch 7, dadurch gekennzeichnet, daß die Fresnelzahl $a^2 / \lambda$ L des Resonators zwischen 0,85 und 0,9 oder ganzzahligen Bruchteilen davon gewählt ist.